# EUROPEAN PATENT APPLICATION

(11) **EP 4 786 818 A1**
(43) Date of publication of application: **05.08.2026**
(21) Application number: 25155178.4
(22) Date of filing: 31.01.2025
(51) Int. Cl.: F16F 15/04, B07B 1/46

(54) **BIDIRECTIONAL SPRING SUPPORT ASSEMBLY**

(71) Applicant: Sandvik SRP AB, 233 81 Svedala (SE)
(72) Inventor: Heiskanen, Atte, 15170 Lahti (FI)
(74) Representative: Sandvik

(57) **Abstract**

There is provided a bidirectional support assembly (10) for bidirectional support of a vibratory device (20), the assembly (10) comprising a connector (45) for cooperating with the vibratory device (20); a primary support arrangement (4, 42, 42', 44) comprising one or more primary spring element(s) (42, 42) configured to be compressed in response to downward displacement of the connector (45) for supporting the connector (45) in an upwards directed first support direction (D1); a secondary support arrangement (6, 62, 62', 63, 63', 64, 64') comprising one or more secondary spring element(s) (61, 62) configured to be compressed in response to upward displacement of the connector (45) for supporting the connector (45) in a second support direction (D2) that is opposite the first support direction (D1).

## Description

### TECHNICAL FIELD

The present disclosure relates to a spring support assembly for vibratory devices, such as screening devices or feeders, for processing a bulk material.

### BACKGROUND

As everybody knows, vibratory devices are commonly employed in the mining and construction industry for fractioning or feeding soil material, such as ore, rock and coal. The vibratory device is oftentimes supported on an underlying stationary base structure via spring support assemblies for allowing the vibratory device to oscillate at a desired amplitude and frequency. The vibrations are typically facilitated by one or mor exciters, such as eccentric weight exciters facilitating vibration of the vibratory device at a certain frequency. As with many other types of systems, the structural system of the vibratory device and the spring support assemblies has a natural frequency. In the case of vibratory devices in the sense of the present disclosure, it may be desirable to avoid vibration of the system at its natural frequency, as this may result in exacerbated amplitude of oscillation. However, as the exciters are starting up, they will revolve at a range of frequencies, including the natural frequency of the system, thereby potentially causing at least temporary violent oscillation of the vibratory device, which may ultimately cause the vibratory device to turn substantially around a transverse axis. A common approach to control vibration the system is to arrange the vibratory device supported at four support locations via spring support assemblies, and with the center of gravity of the vibratory device arranged midway between an upstream set of the spring supports and a downstream set of the spring supports. However, this configuration leaves little flexibility in the provision of the underlying support structure on which the vibratory device rests. Also, as material is fed from a feeding end of the vibratory device to a discharge end of the vibratory device, the center of gravity will shift accordingly.

In response to the above-mentioned challenges, the inventor of the present disclosure has devised a novel solution aimed to overcome, or at least to some extent reduce the drawbacks of the prior art.

### SUMMARY

There is disclosed a bidirectional support assembly for bidirectional support of a vibratory device, such as a screening device or a feeder for processing bulk material, the assembly comprising an upwards facing region and an opposite downwards facing region, and a connector for cooperating with the vibratory device. A primary support arrangement is provided and comprises one or more primary spring element(s), that may be configured to be compressed in response to downward displacement of the connector for supporting the connector (and thus the vibratory device) in an upwards directed first support direction.

Optionally, the primary support arrangement comprises the connector.

A secondary support arrangement is provided and comprises one or more secondary spring element(s) that may be configured to be compressed in response to upward displacement of the connector for supporting the connector (and thus the vibratory device) in a second support direction that is opposite the first support direction.

In an embodiment, the spring support assembly comprising a support member that may be operatively coupled to the connector. Optionally, the primary support arrangement comprises the support member.

The support member may be allowed to oscillate upwards and downwards during use.

In an embodiment, the primary spring elements and the secondary spring elements cooperate with the support member.

In an embodiment, the primary spring elements are disposed at a lower side of the support member.

In an embodiment, the secondary spring elements are disposed at an opposite upper side of the support member.

In an embodiment, the connector is operatively coupled to the support member.

In an embodiment, the secondary spring elements abut an upper surface of the support member.

In an embodiment, the primary spring elements abut a lower surface of the support member.

In an embodiment, the connector is a mechanical clamping mechanism for holding the vibratory device to the support member.

In an embodiment, the secondary support arrangement is configured to be connected to a stationary base. The stationary base may be juxtaposed below the primary spring elements.

In an embodiment, the secondary support arrangement comprises one or more upper cap members configured to arrest upwards displacement of the secondary spring elements beyond the cap members.

In an embodiment, the secondary support arrangement comprises one or more elongate support element(s) connected to the one or more cap members and configured to be connected to the base.

In an embodiment, the spring support assembly comprising the base. The secondary support arrangement may be connected to the base, The one or more elongate element(s) may attach to the base.

In an embodiment, the primary spring elements are adapted to bear or rest on the base or bear or rest on the base.

In an embodiment a respective elongate element of the one or more elongate element(s) extends through a respective secondary spring element of the one or more secondary spring elements.

In an embodiment a respective elongate element of the one or more elongate element(s) extends through a respective primary spring element of the one or more primary spring elements.

In an embodiment one or more or all the primary spring elements and the secondary spring elements comprises a resilient material, such as a resilient polymer-based material.

There is disclosed a secondary support arrangement according to embodiments of the disclosure.

There is disclosed use of a secondary support arrangement according to embodiments of the disclosure in or with a vibratory device for processing bulk material.

There is disclosed a vibratory device, such as a screening device or a feeder, comprising one or more spring support assembly according to embodiments of the disclosure.

In an embodiment, the vibratory device comprises a pair of opposing side walls extending between a feeding end and an opposite discharge end of the vibratory device, wherein the one or more spring support assembly comprises a plurality of spring support assemblies, The plurality of spring support assemblies may comprise a proximal set of spring support assemblies provided proximal the feeding end and a distal set of spring support assemblies provided distal the feeding end in relation to the proximal set of spring support assemblies.

In an embodiment a center of gravity of the vibratory device is proximal to the distal set of spring support assemblies as compared to the proximal set of spring support assemblies.

As such, certain embodiments of the disclosure may facilitate improved stability of a vibratory device during operation. In particular, embodiments of the disclosure may facilitate that vertical displacement of the feeding end is controlled and/or limited.

As such, certain embodiments of the disclosure may facilitate greater flexibility in the provision and positioning of a base structure for supporting the vibratory device. For example, certain embodiments of the disclosure may facilitate that a center of gravity of the vibratory device may be arranged at different distances from the spring support assemblies.

### BRIEF DESCRIPTION OF DRAWINGS

FIG. 1 shows a vibratory device comprising a bidirectional spring support assembly according to an embodiment of the disclosure.
FIG. 2 shows details of a bidirectional spring support assembly according to an embodiment of the disclosure.

### DETAILED DESCRIPTION

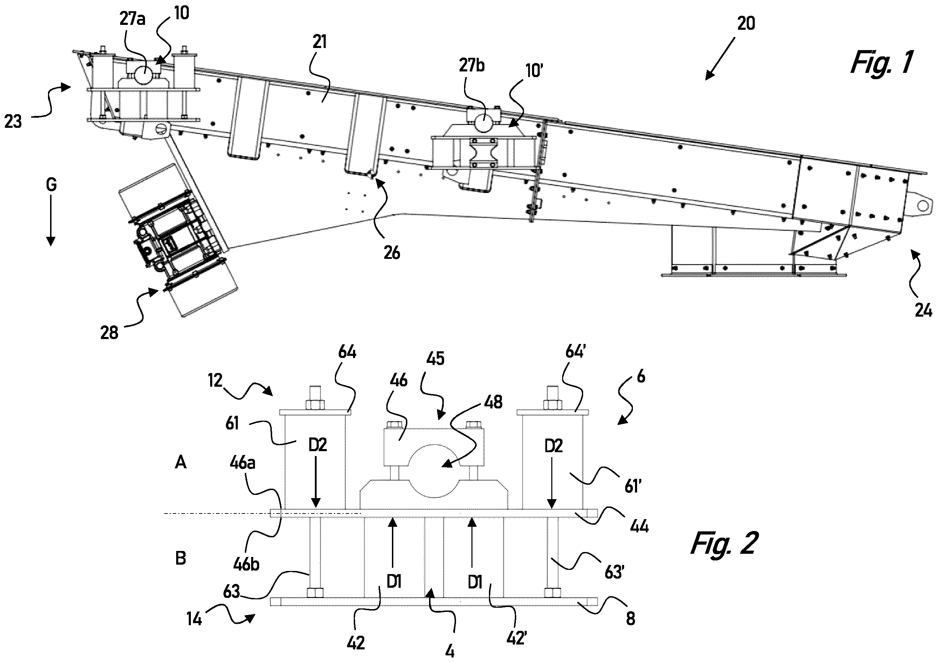

FIG. 1 shows a vibratory device 20, which may be a screening device or a feeder, and comprising one or more spring support assembly 10 according to embodiments.

The vibratory device 20 comprises a pair of opposing side walls 21 extending between a feeding end 23 and an opposite discharge end 24 of the vibratory device 20. A proximal set of spring support assemblies, which may be spring support assemblies 10 according to embodiments disclosed herein, is provided proximal the feeding end 23 and a distal set of spring support assemblies 10' is provided distal the feeding end 23 in relation to the proximal set of spring support assemblies. Of course, also the distal set of springs support assemblies 10' may be spring support assemblies 10 according to embodiments disclosed herein.

A respective spring support assembly of the proximal set of spring support assemblies 10 are provided at a respective side wall of the opposing side walls 21.

A center of gravity 26 of the vibratory device 20 may be proximal to the distal set of spring support assemblies 10' as compared to the proximal set of spring support assemblies 10. Thus, the vibratory device 20 may comprise four spring support assemblies 10, 10', such as two spring support assemblies 10, 10' at each side wall 21.

Of course, in some embodiments the center of gravity 26 of the vibratory device 20 may be arranged substantially midway or midway between the distal set of spring support assemblies 10' and the proximal set of spring support assemblies 10 without departing from the scope of the disclosure.

FIG. 2 shows details of the bidirectional spring support assembly 10, also herein abbreviated "spring support 10", according to an embodiment. The spring support 10 is configured for bidirectional support of a vibratory device 20 for processing bulk material, such as soil, ore, rock, or coal.

A connector 45 is provided for connecting or coupling the spring support 10 with the vibratory device 20. For example, the connector 45 may clamp the vibratory device 20 to the spring support 10.

The spring support 10 comprises a primary support arrangement 4, 42, 42' cooperating with, such as coupled or connected to, the connector 45. The primary support arrangement comprises one or more primary spring elements 42, 42' to support the vibratory device 20 in an upwards directed first support direction D1 that may be directed opposite to the force of gravity G such as to bear at least part of the weight of the vibratory device 20 during use under the action of gravity.

A secondary support arrangement 6, 61, 61', 63, 63', 64', 64' is provided cooperating with, such as connected or coupled to, the connector 45. The secondary support arrangement 6 comprises one or more secondary spring elements 61, 61' configured to be compressed in response to upward displacement of the connector 45 for supporting the connector 45 in a second support direction D2 that is opposite the first support direction D1.

A support member 44 is provided and may be operatively coupled to the connector 45. Displacement of the support member 44 in the second support direction D2, i.e. downwards, may cause compression of the primary spring elements 42, 42', thereby supporting the connector 45 in response to said compression by exertion of a reactive counter directed force to the support member 44.

Likewise, displacement of the support member 44 in the first support direction D1, i.e. upwards, may cause compression of the secondary spring elements 61, 61', thereby supporting the connector 45 in response to said compression by exertion of a reactive counter directed force to the support member 44.

The vibratory device 20 may be supported at an upper side A of the support member 44 by the secondary support arrangement 6, as derivable from FIG. 2. The vibratory device 20 may be supported at a lower side B of the support member 44 by the primary support arrangement 2, as derivable from FIG. 2.

The connector 45 is provided at the upper side A. For example, the connector 45 may be bolted or welded to the support member 44.

The primary spring elements 42, 42' may be provided at a lower side B of the support member 44. The secondary spring elements 61, 62 may be provided at the upper side A of the support member 44.

The connector 45 may be configured for holding, including attaching, the vibratory device 20 to the support member 44. The connector 45 may be provided in the shape of a mechanical clamping mechanism. The connector 45 may comprise an aperture 48 for receiving a part of the vibratory device 20, such as a protrusion or hub projecting from the vibratory device side wall 21. Thus, a respective connector 45 of the one or more spring support assemblies 10 may receive a respective said part of the vibratory device 20.

The secondary support arrangement 6 may be configured to connect to a base 8, preferably the base is stationary during use. The base 8 may be provided in shape of a plate, which may form part of a support for supporting the vibratory device. Of course, the spring support assembly 10 may comprise the base 8. The base 8 may for example be a base plate adapted to be connected, such as bolted, to a support, such as a sub-structure (not shown) for suspending the vibratory device 20 at a desired elevation from the ground. Hence, the support may be configured to accommodate a plurality of spring support assemblies.

The one or more primary spring elements 42, 42 may be juxtaposed underneath the connector 45, such as immediately beneath.

The primary spring elements 42, 42' may be provided interspaced between the support member and, where applicable, the base 8. The primary spring elements 42, 42' abut a lower surface 46b, such as a downwards facing surface, of the support member 44.

A respective secondary spring element 61, 61' of the one or more secondary spring elements 61, 61' may be provided interspaced between one or more cap member 64, 64', such as a respective cap member, and the support member 44. The secondary spring elements may abut an upper surface 46a, such as an upwards facing surface, of the support member 44.

A respective secondary spring element of the one or more secondary spring elements 61, 62 may be juxtaposed at a respective side of the holding member 45, as seen in a longitudinal direction of the vibratory device 20, as derivable from FIG. 1 and/or as seen in a plane parallel the side wall 21.

The secondary support arrangement 6 may be configured to support the one or more secondary spring elements 42, 42 in the second support direction D2 at a fixed distance from the base 8, such as at respective cap members 64. The cap members are provided to arrest displacement of the secondary spring elements 61, 61' in an upwards direction beyond the cap members.

The cap members 64 may be configured to cooperate with the one or more of the secondary spring elements 61, 62. The one or more cap members 64 may be configured to connect to the base 8 for supporting the connector 45 and/or the support member 44 in the second support direction D2.

The secondary support arrangement 6 may comprise one or more elongate support elements 63 configured to couple the one or more cap members 64 to the base 8 for said supporting the support member 44 and or the connector 45 in the second support direction D2.

In some embodiments the secondary support arrangement 6 may be adapted to attach to the base 8. As mentioned, in some embodiments, the spring support assembly 10 may comprise the base 8, and the secondary support arrangement be attached to the base 8. Preferably the one or more elongate elements 63 attach to the base 8.

A respective elongate element of the one or more elongate elements 63 may extends through a respective secondary spring element of the one or more secondary spring elements 61, 61'. This configuration provides for a compact, simple, and robust construction.

Optionally a respective elongate element of the one or more elongate elements 63 extends through a respective primary spring element of the one or more primary spring elements 42, 42.

One or more or all the primary spring elements 42, 42' and the secondary spring elements 61, 61' may comprise a resilient polymer-based material, such as rubber. Of course, traditional metal springs may also be contemplated and provide similar effects.

The secondary support arrangement according to embodiments may be advantageous as a retrofit solution cooperating with a spring support arrangement, which may comprise a primary support arrangement 4 according to embodiments of the disclosure, and optionally a support member according to embodiments, to thereby support the connector 45 in the second direction D2.

### ITEMS

ITEM 1. A bidirectional support assembly 10 for bidirectional support of a vibratory device 20, such as a screening device or a feeder for processing bulk material, the assembly 10 comprising an upwards facing region 12 and an opposite downwards facing region 14, and
   a connector 45 for cooperating with the vibratory device 20;
   a primary support arrangement 4, 42, 42', 44 comprising one or more primary spring element(s) 42, 42 configured to be compressed in response to downward displacement of the connector 45 for supporting the connector 45 in an upwards directed first support direction D1;
   a secondary support arrangement 6, 62, 62', 63, 63', 64, 64' comprising one or more secondary spring element(s) 61, 62 configured to be compressed in response to upward displacement of the connector 45 for supporting the connector 45 in a second support direction D2 that is opposite the first support direction D1.
ITEM 2. The spring support assembly 10 according to any preceding or subsequent item, comprising a support member 44 operatively coupled to the connector 45, wherein the support member 44 is allowed to oscillate upwards and downwards during use.
ITEM 3. The spring support assembly 10 according to any preceding or subsequent item, wherein the primary spring elements 42, 42' and the secondary spring elements 61, 61' cooperate with the base plate 44.
ITEM 4. The spring support assembly 10 according to any preceding or subsequent item, wherein the primary spring elements 42', 42 are disposed at a lower side B of the support member 44 and the secondary spring elements 61, 61' are disposed at an opposite upper side A of the support member 44.
ITEM 5. The spring support assembly 10 according to any preceding or subsequent item, wherein the connector 45 is operatively coupled to the support member 44.
ITEM 6. The spring support assembly 10 according to any preceding or subsequent item, wherein the connector 45 is a mechanical clamping mechanism for holding the vibratory device 20 to the support member 44.
ITEM 7. The spring support assembly 10 according to any preceding or subsequent item, wherein the secondary support arrangement 6 is configured to be connected to a stationary base 8.
ITEM 8. The spring support assembly 10 according to any preceding or subsequent item, wherein the secondary support arrangement 6 comprises one or more upper cap members 64 configured to arrest upwards displacement of the secondary spring elements 61, 62 beyond the cap members 64, 64'.
ITEM 9. The spring support assembly 10 according to preceding or subsequent item, wherein the secondary support arrangement 6 comprises one or more elongate support element(s) (63, 63' connected to the one or more cap members 64, 64' and configured to be connected to the base 8.
ITEM 10. The spring support assembly 10 according to any preceding or subsequent item, comprising the base 8, wherein the secondary support arrangement 6 is connected to the base 8, preferably the one or more elongate elements 63 attach to the base 8.
ITEM 11. The spring support assembly 10 according to any preceding or subsequent item, wherein the primary spring elements 42, 42' bear or rest on the base 8.
ITEM 12. The spring support assembly 10 according to any preceding or subsequent item, wherein a respective elongate element of the one or more elongate elements 63 extends through a respective secondary spring element of the one or more secondary spring elements 61, 62.
ITEM 13. The spring support assembly 10 according to any preceding or subsequent item wherein a respective elongate element of the one or more elongate elements 63 extends through a respective primary spring element of the one or more primary spring elements 42, 42.
ITEM 14. The spring support assembly 10 according to any preceding or subsequent item, wherein one or more or all the primary spring elements 42, 42 and the secondary spring elements 61, 62 comprises a resilient material, such as a resilient polymer-based material.
ITEM 15. The spring support assembly 10 according to any preceding item wherein the primary spring elements 42, 42' are be provided interspaced between the support member and, where applicable, the base 8.
ITEM 16. The spring support assembly 10 according to any preceding or subsequent item wherein a respective secondary spring element 61, 61' of the one or more secondary spring elements 61, 61' are provided interspaced between one or more cap member 64, 64', such as a respective cap member, and the support member 44.
ITEM 17. A secondary support arrangement 6 according to any one of the preceding items.
ITEM 18. Use of a secondary support arrangement 6 according to any one of items 1 to 16 in a vibratory device 20 for processing bulk material.
ITEM 19. A vibratory device 20, such as a screening device or a feeder, comprising one or more spring support assembly 10 according to any one of the preceding items 1 to 16.
ITEM 20. The vibratory device 20 according to the preceding item 19, comprising a pair of opposing side walls 21 extending between a feeding end 23 and an opposite discharge end 24 of the vibratory device 20, wherein the one or more spring support assembly 10 comprises a plurality of spring support assemblies, and wherein the plurality of spring support assemblies comprises a proximal set of spring support assemblies provided proximal the feeding end 23 and a distal set of spring support assemblies 10' provided distal the feeding end 23 in relation to the proximal set of spring support assemblies.
ITEM 21. The vibratory device 20 according to any one of the preceding items 19 to 20, wherein a center of gravity 26 of the vibratory device 20 is proximal to the distal set of spring support assemblies 10' as compared to the proximal set of spring support assemblies 10.

## Claims

1. A bidirectional support assembly (10) for bidirectional support of a vibratory device (20), such as a screening device or a feeder for processing bulk material, the assembly (10) comprising an upwards facing region (12) and an opposite downwards facing region (14), and
a connector (45) for cooperating with the vibratory device (20);
a primary support arrangement (4, 42, 42', 44) comprising one or more primary spring element(s) (42, 42) configured to be compressed in response to downward displacement of the connector (45) for supporting the connector (45) in an upwards directed first support direction (D1);
a secondary support arrangement (6, 62, 62', 63, 63', 64, 64') comprising one or more secondary spring element(s) (61, 62) configured to be compressed in response to upward displacement of the connector (45) for supporting the connector (45) in a second support direction (D2) that is opposite the first support direction (D1).

2. The spring support assembly (10) according to any preceding claim 1, comprising a support member (44) operatively coupled to the connector (45), wherein the support member (44) is allowed to oscillate upwards and downwards during use, and wherein the primary spring elements (42, 42') and the secondary spring elements (61, 61') cooperate with the base plate (44).

3. The spring support assembly (10) according to any preceding claim 1 or 2, wherein the primary spring elements (42', 42) are disposed at a lower side (B) of the support member (44) and the secondary spring elements (61, 61') are disposed at an opposite upper side (A) of the support member (44).

4. The spring support assembly (10) according to any one of the preceding claims 2 or 3, wherein the connector (45) is a mechanical clamping mechanism for holding the vibratory device (20) to the support member (44).

5. The spring support assembly (10) according to any one of the preceding claims 1 to 4, wherein the secondary support arrangement (6) is configured to be connected to a stationary base (8).

6. The spring support assembly (10) according to any one of the preceding claims 1 to 6, wherein the secondary support arrangement (6) comprises one or more upper cap members (64) configured to arrest upwards displacement of the secondary spring elements (61, 62) beyond the cap members (64, 64').

7. The spring support assembly (10) according to any one of the preceding claims 1 to 6, wherein the secondary support arrangement (6) comprises one or more elongate support element(s) (63, 63') connected to the one or more cap members (64, 64') and optionally configured to be connected to the base (8).

8. The spring support assembly (10) according to any one of the preceding claims 1 to 7, comprising the base (8), wherein the secondary support arrangement (6) is connected to the base (8), optionally the one or more elongate element(s) (63) attach to the base (8).

9. The spring support assembly (10) according to any one of the preceding claims 1 to 8, wherein the primary spring elements (42, 42') bear or rest on the base (8).

10. The spring support assembly (10) according to any one of the preceding claims 1 to 9, wherein a respective elongate element of the one or more elongate element(s) (63) extends through a respective secondary spring element of the one or more secondary spring elements (61, 62).

11. The spring support assembly (10) according to any one of the preceding claims 1 to 11, wherein one or more or all the primary spring elements (42, 42) and the secondary spring elements (61, 62) comprises a resilient material, such as a resilient polymer-based material.

12. The spring support assembly (10) according to any one of the preceding claims 1 to 11, wherein the primary spring elements 42, 42' are provided interspaced between the support member and optionally the base 8, and wherein a respective secondary spring element 61, 61' of the one or more secondary spring elements 61, 61' are provided interspaced between one or more cap member 64, 64', such as a respective cap member, and the support member 44.

13. A secondary support arrangement (6) according to any one of the preceding claims 1 to 12.

14. Use of a secondary support arrangement (6) according to any one of the preceding claims 1 to 12 in a vibratory device (20) for processing bulk material.

15. A vibratory device (20), such as a screening device or a feeder, comprising one or more spring support assembly (10) according to any one of the preceding claims 1 to 12.
